# EUROPÄISCHE PATENTSCHRIFT

(11) **EP 1 083 100 B1**
(45) Veröffentlichungstag und Bekanntmachung des Hinweises auf die Patenterteilung: **17.05.2006**
(21) Anmeldenummer: 00118281.5
(22) Anmeldetag: 05.09.2000
(51) Int. Cl.: B60R 21/20, B60R 21/16

(54) **Seitenaufprall-Schutzeinrichtung**
Side impact protection arrangement
Système de protection en cas de choc latéral

(30) Priorität: 08.09.1999 DE 29915820 U
(43) Veröffentlichungstag der Anmeldung: 14.03.2001
(73) Patentinhaber: TRW Automotive GmbH, 73553 Alfdorf (DE)
(72) Erfinder: Eyrainer, Heinz, 73550 Waldstetten (DE)
(74) Vertreter: Kitzhofer, Thomas

(56) Entgegenhaltungen:
- DE-A- 19 541 513
- DE-A- 19 720 588
- US-A- 5 868 421
- US-A- 5 921 576
- HUBER G: "DIE KAROSSERIE DER NEUEN E-KLASSE VON MERCEDES-BENZ - TEIL 1" , ATZ AUTOMOBILTECHNISCHE ZEITSCHRIFT, FRANCKH'SCHE VERLAGSHANDLUNG. STUTTGART, DE, VOL. 97, NR. 7/8, PAGE(S) 420-427 XP000521272 ISSN: 0001-2785 * Seite 7, Spalte 3, Absatz 3.2; Abbildung 11 *

## Beschreibung

Die Erfindung betrifft eine aufblasbare Seitenaufprall-Schutzeinrichtung für Fahrzeuginsassen, gemäß dem Oberbegriff des Anspruchs 1.

Seitenaufprall-Schutzsysteme, die den Beckenbereich oder den Toraxbereich des Fahrzeuginsassen schützen sollen, sind entweder seitlich in die Rückenlehne integriert oder in die Seitenwand (d.h. der Fahrzeugtür oder, bei einem zwei- oder dreitürigen Fahrzeug, im Bereich der Heckinsassen in der Seitenwand selbst) integriert. Die bekannten Gassack-Module sind bei gefaltetem Gassack sehr dick, da der Gassack in mehreren Richtungen gefaltet ist und ein komprimiertes Packvolumen aufweist. Beim Entfalten tritt er entweder aus der Rückenlehne aus und entfaltet sich nach vorn oder aus der Seitenwandverkleidung, die eine vorgegebene Öffnungslinie aufweist. Die bekannten Seitengassäcke für den Torax- und Beckenbereich haben auch im aufgeblasenen Zustand eine große Tiefe (horizontal, quer zur Fahrtrichtung), weshalb die Gefahr besteht, daß z.B. schlafende Insassen, die sich an die Seitenwand gelehnt haben, durch den sich entfaltenden Gassack verletzt werden. Auch die unter Umständen aufreißende Verkleidung stellt ein gewisses Gefährdungspotential dar, da sie sich ebenfalls in Richtung Insassen bewegt.

Die gattungsgemäße US 5 324 072 A zeigt eine Seitenaufprall-Schutzvorrichtung, bei der ein Gassack gefaltet hinter der Armlehne einer Seitenwandverkleidung angeordnet ist. Die Seitenwandverkleidung ist mit einer oberen und einer unteren Klappe versehen. Aufgeblasen erstreckt sich ein Abschnitt des Gassacks in Beckenbereich des Insassens, während ein zweiter Abschnitt nach oben zur Seitenscheibe gerichtet ist. Beide Abschnitte der Gassacks erstrecken sich von ihrem Einbauert hinter der Armlehne aus. Die untere Klappe definiert einen nach unten gerichteten Schußkanal für den unteren Abschnitt der Gassacks.

Die US-A-5 868 421 zeigt eine Seitenaufprall-Schutzvorrichtung mit einem Gassack, der aufgeblasen einen Bereich einer Seitenscheibe eines Fahrzeugs abdeckt. Zusammengelegt ist der Gassack dicht unterhalb der Fensterbrüstung angeordnet und durch eine nach oben öffnende Klappe geschützt.

In der DE-A-195 41 513 ist eine Seitenaufprall-Schutzvorrichtung gezeigt, bei der an einem Fahrzeugsitz zwei Gassäcke angeordnet sind. Von einem mittig an der Rückenlehne des Sitzes angeordneten Gasgenerator erstreckt sich einer der Gassäcke im Kopfbereich eines Insassen und der andere in dessen Beckenregion.

Die Erfindung schafft eine Seitenaufprall-Schutzeinrichtung, die bei sogenannten OOP-Stellungen (Out-of-Position) ein geringeres Gefährdungspotential bildet. Zudem zeichnet sich die erfindungsgemäße Schutzeinrichtung durch bessere Unterbringungsmöglichkeiten in der Seitenwand aus.

Dies wird bei einer Schutzeinrichtung der eingangs genannten Art dadurch die Merkmale des Anspruchs 1 erreicht. Die erfindungsgemäße Schutzeinrichtung zeichnet sich durch einen großflächigen Seitengassack aus, dessen Entfaltungsrichtung durch das Abschlußteil wesentlich mitdefiniert wird. Die Hauptentfaltungsrichtung ist nach unten, d.h. im wesentlichen parallel zur Tür gerichtet und nicht, wie bei den bekannten Seitengassäcken für den Torax- und Beckenbereich in Richtung zum Insassen. Der entfaltete Gassack erstreckt sich vom oberen Abschlußteil aus nach unten. Der erfindungsgemäße Gassack ist somit vorzugsweise großflächig und hat eine geringe Dicke im aufgeblasenen Zustand, so daß die Gefährdung der Insassen reduziert werden kann.

Das Abschlußteil weist vorzugsweise einen unteren Rand auf, welcher lösbar an der übrigen Seitenwandverkleidung arretiert ist. Das obere Abschlußteil, welches üblicherweise aus nicht mit Textilgewebe bezogenem Kunststoff besteht und ein separates Teil der gesamten Seitenwandverkleidung darstellt, muß üblicherweise ohnehin am unteren Rand befestigt werden. Die Umkonstruktion der bislang bekannten Seitenwandverkleidung wird deshalb durch die erfindungsgemäße Schutzeinrichtung nur geringfügig beeinflußt.

Gemäß der bevorzugten Ausführungsform ist die lösbare Befestigung eine Zierleiste der Seitenwandverkleidung, also ebenfalls ein bereits bekanntes und vorgesehenes Teil, hinter das sich der untere Rand des Abschlußteils erstreckt und das den unteren Rand klemmt.

Wie bereits erwähnt, soll der erfindungsgemäße Gassack großflächig ausgebildet sein, genauer gesagt sollte er sich wenigstens bis zur Armlehne in der Seitenwand und, in Längsrichtung, vorzugsweise wenigstens annähernd über die Hälfte der Länge der zugeordneten Seitenwand erstrecken.

Im gefalteten Zustand soll der Gassack eine langgestreckte Gestalt haben, was zu einer geringen Packungsdicke führt und was die Unterbringung erleichtert.

Die Dicke des Moduls (Gasgenerator, Gassack und evtl. Gehäuse) läßt sich dadurch reduzieren, daß der Gasgenerator außerhalb des Gassacks angeordnet ist. Ein gegebenenfalls vorgesehenes Gasführungsrohr verbindet den Gasgenerator mit dem Inneren des Gassacks.

Die Entfaltungszeit und das Risiko, von dem sich entfaltenden Gassack getroffen zu werden, kann dadurch auch noch weiter reduziert werden, daß die Klappe eine Länge aufweist, die wenigstens der Packlänge des Gassacks entspricht. Das bedeutet, der Gassack kann über seine gesamte Packlänge aus der Seitenverkleidung heraustreten, was seine Entfaltungszeit verringert.

Die erfindungsgemäße Schutzeinrichtung ist gemäß der bevorzugten Ausführungsform so in die Seitenwandverkleidung integriert, daß sie zusammen mit der Seitenwandverkleidung eine komplett vormontierte Einheit bildet.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Seitentür mit aufgeblasenem Gassack als Teil der erfindungsgemäßen Seitenaufprall-Schutzeinrichtung,
Fig. 2 eine Querschnittsansicht durch die gezeigte Ausführungsform der erfindungsgemäßen Seitenaufprall-Schutzeinrichtung bei gefalteten Gassack, und

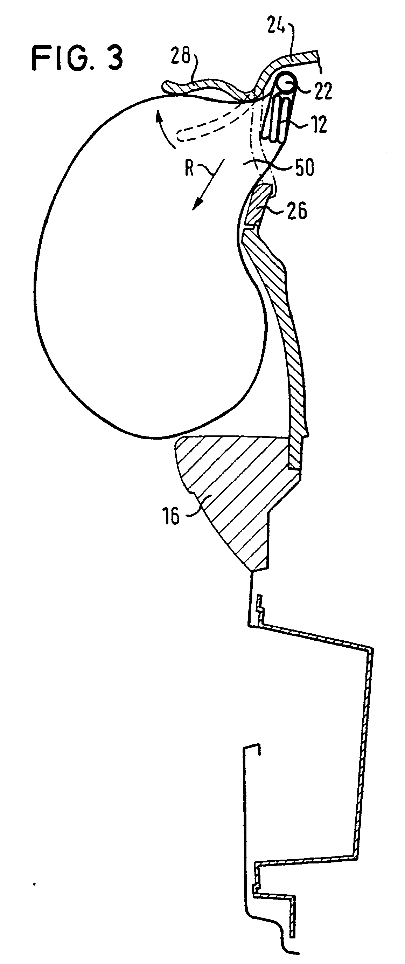

Fig. 3 eine Querschnittsansicht durch die erfindungsgemäße Schutzeinrichtung nach Fig. 2 mit entfaltetem Gassack.

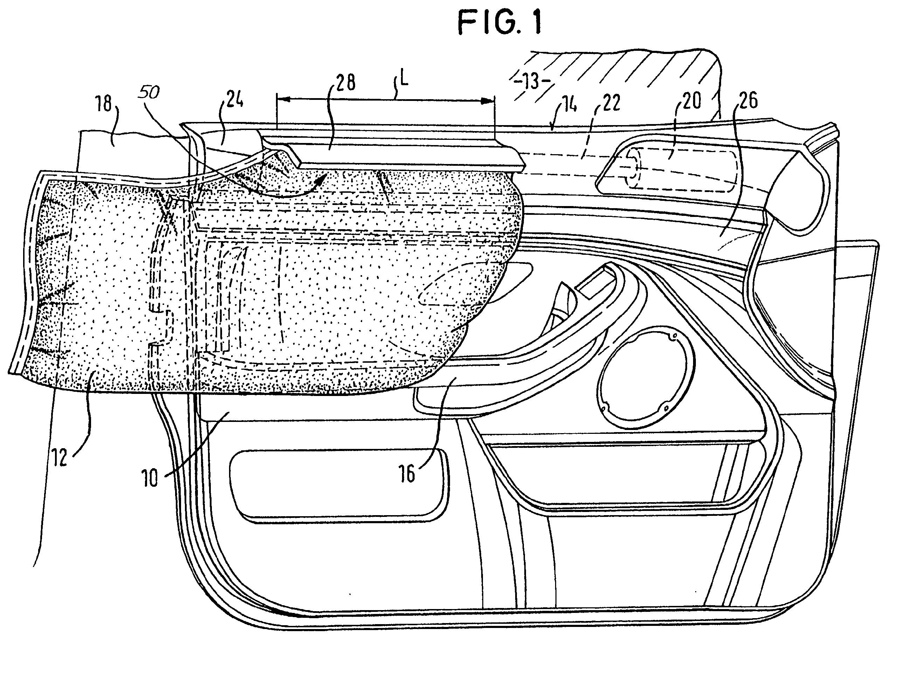

In Fig. 1 ist eine aufgeblasene Seitenaufprall-Schutzeinrichtung für Fahrzeuginsassen, hier für einen Fahrzeugfrontinsassen, gezeigt. Die Schutzeinrichtung ist in der Seitenwandverkleidung 10 untergebracht. Da die Seitenwand vorliegend durch die Fahrzeugtür gebildet ist, wird im folgenden von der Türverkleidung gesprochen, wobei die gezeigte Ausführungsform entsprechend auch für den Heckbereich benutzbar ist, wenn dort keine Tür vorgesehen sein sollte. Die Seitenaufprall-Schutzeinrichtung weist einen großflächigen Gassack 12 auf, der eine relativ geringe Dicke hat, aber einen großen Teil der Tür (Seitenwand) abdeckt und damit den Torax- und Beckenbereich des Insassen schützt. Der Gassack 12 erstreckt sich vom unteren Rand 14 des in Fig. 1 schraffiert angedeuteten Fensterabschnitts 13 bis über die Armlehne 16 nach unten, bis zur Hälfte der Tür nach vorne und nach hinten über die Tür hinaus und deckt die B-Säule 18 des Fahrzeugs ab.

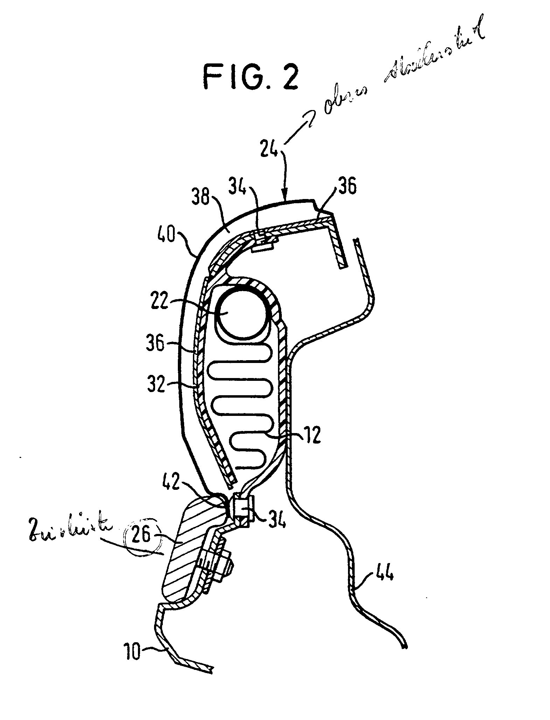

Die Schutzeinrichtung umfaßt ferner einen mit unterbrochenen Linien gezeigten und hinter der Türverkleidung 10 untergebrachten Gasgenerator 20. Der Gasgenerator 20 ist außerhalb des Gassacks 12 untergebracht, steht mit dem Inneren des Gassacks 12 aber über ein Gasführungsrohr 22, das anhand von Fig. 2 später noch näher erläutert wird, in Verbindung.

Die Türverkleidung 10 besteht aus mehreren, miteinander verbundenen Teilen. Eines dieser Teile ist ein oberes Abschlußteil 24, das vom unteren Rand des Fensterabschnitts 13 beginnend bogenförmig nach innen und schließlich nach unten verläuft und sich bis zu einer Zierleiste 26 erstreckt, die über die gesamte Länge der Türverkleidung 10 verläuft. Das obere Abschlußteil 24 hat einen Abschnitt, der als Klappe 28 ausgebildet ist. Die Länge der Klappe 28 ist etwas länger als die Packlänge L des Gassacks 12. Im gefalteten Zustand hat der Gassack 12 eine geringe Dicke, aber eine langgestreckte Gestalt, so daß er leicht unter dem oberen Abschlußteil 24 untergebracht werden kann. Das Gasführungsrohr 22 hat darüber hinaus einen geringeren Querschnitt als der Gasgenerator 20 und trägt dazu bei, daß die Schutzeinrichtung leicht in der Verkleidung der Tür untergebracht werden kann. Das Gasführungsrohr 22 erstreckt sich im übrigen über die gesamte Packlänge L des Gassacks. Dies hat den Vorteil, daß das Gas über eine große Fläche gleichmäßig in den Gassack einströmt und dieser sich schnell und gleichmäßig, wie im folgenden noch erläutert wird, nach unten entfalten kann.

In Fig. 2 ist zu erkennen, daß Gassack samt Gasführungsrohr im Querschnitt geringe Abmessungen haben und leicht unter dem oberen Abschlußteil 24 untergebracht werden können. Das Gasführungsrohr 22 und der Gassack 12 sind von einem Aufnahmeteil 32 umgeben, das sozusagen ein Gehäuse für den Gassack und das Gasführungsrohr bildet und auch als Gassackmodulgehäuse bezeichnet werden kann. Das Aufnahmeteil 32 hält den Gassack 12 in seinem gefalteten Zustand und ist an der Türverkleidung über Schrauben 34 befestigt. Genauer gesagt ist das Aufnahmeteil 32 einerseits am sogenannten Schaumträgerteil 36 des oberen Abschlußteils 24 angeschraubt. An das Schaumträgerteil 36 schließt sich ein geschäumter Bereich 38 und an diesen eine außenseitige Folie 40 an, um das obere Abschlußteil 24 zu bilden. Im Bereich seines unteren Randes ist das Aufnahmeteil 32 andererseits an ein anderes Verkleidungsteil angeschraubt. Wie Fig. 2 zu entnehmen ist, hat das obere Abschlußteil einen unteren dünnen Rand 42, der sich hinter die Zierleiste 26 erstreckt und von dieser geklemmt wird. Die Zierleiste 26 bildet dadurch eine lösbare Befestigung für den unteren Rand 42. Das Türinnenblech trägt das Bezugszeichen 44.

In einem Rückhaltefall strömt das vom Gasgenerator 20 erzeugte Gas über das Gasführungsrohr 22 in das Innere des Gassacks 12. Der Gassack beginnt, sich zu entfalten, wobei die Entfaltung hauptsächlich nur nach unten erfolgen muß. Der Gassack 12 drückt das Aufnahmeteil 32, das ein im Querschnitt offenes Profil hat, auseinander und den unteren Rand 42 aus der Verankerung durch die Zierleiste 26. Die Klappe 28 schwenkt aufgrund ihrer Flexibilität nach außen und setzt dem Schwenkvorgang aber einen gewissen Widerstand entgegen. Zwischen Klappe 28 und Zierleiste 26 ergibt sich ein sogenannter Schußkanal 50, der die Richtung der Entfaltung zu Beginn des Entfaltungsvorgangs vorgibt. Die Hauptentfaltungsrichtung, dargestellt durch den Pfeil R, ist somit schräg nach unten. Der Gassack 12 soll dadurch schnell nicht in Richtung des Insassen, sondern nach unten, möglichst parallel zur Tür entfaltet werden und möglichst schnell auch seine gesamte Fläche als Rückhaltefläche zur Verfügung stellen.

Die dargestellte Schutzeinrichtung ist in die Türverkleidung 10 integriert und bildet mit ihr eine vormontierte Einheit.

Die erfindungsgemäße Schutzeinrichtung stellt ein niedriges Gefahrenpotential für Insassen dar, die sich an die Seitenwand oder Tür anlehnen, da die Klappe 28 nicht sonderlich weit nach außen schwenkt und der Gassack sich nach unten entfaltet. Ein an die Klappe 28 angelehnter Insasse kann das Entfalten auch nicht wesentlich verzögern, da die Klappe 28 sehr lang ist, sich also eine lange Öffnungslinie ergibt, längs der sich der Gassack 12 entfalten kann.

## Patentansprüche

1. Aufblasbare Seitenaufprall-Schutzeinrichtung für Fahrzeuginsassen, die in einer Fahrzeugseitenwand integriert ist, mit
einem Gassack (12),
einem Gasgenerator (20) und
einer Seitenwandverkleidung (10),
wobei die Seitenwandverkleidung (10) ein oberes Abschlußteil (24) aufweist, das die Verkleidung zum unteren Rand (14) des Fensterabschnitts (13) abschließt,
wobei das obere Abschlußteil (24) wenigstens abschnittsweise als Klappe (28) ausgebildet ist, die aufgeschwenkt einen nach unten gerichteten Schußkanal (50) für den Gassack (12) definiert,
**dadurch gekennzeichnet, daß**
der Gassack (12) an seinem oberen Endebefestigt und gefaltet unter dem oberen Abschlußteil (24) angeordnet ist
und der Gassack (12) im entfalteten Zustand großflächig die Seitenwand verkleidung (10) seitlich des Thorax- und des Beckenbereichs des Insassen abdeckt, indem sich ein aufgeblasener Teil vom unteren Rand (14) des Fensterabschnitts (13) aus durchgehend bis seitlich des Beckenbereichs erstreckt.

2. Schutzeinrichtung nach Anspruch 1, **dadurch gekennzeichnet, daß** das Abschlußteil (24) einen unteren Rand (42) aufweist, der mittels einer durch den sich entfaltenden Gassack (12) lösbaren Befestigung an der übrigen Seitenwandverkleidung (10) arretiert ist.

3. Schutzeinrichtung nach Anspruch 2, **dadurch gekennzeichnet, daß** die lösbare Befestigung eine Zierleiste (26) der Seitenwandverkleidung (10) ist, hinter die sich der untere Rand (42) erstreckt und die den unteren Rand (42) klemmt.

4. Schutzeinrichtung nach einem der vorhergehenden Ansprüche, **dadurch gekennzeichnet, daß** sich der Gassack (12) im entfalteten Zustand wenigstens bis zur Armlehne (16) in der Seitenwand erstreckt.

5. Schutzeinrichtung nach einem der vorhergehenden Ansprüche, **dadurch gekennzeichnet, daß** der Gassack (12) im gefalteten Zustand eine langgestreckte Gestalt hat.

6. Schutzeinrichtung nach einem der vorhergehenden Ansprüche, **dadurch gekennzeichnet, daß** der Gasgenerator (20) außerhalb des Gassacks (12) angeordnet ist.

7. Schutzeinrichtung nach Anspruch 6, **dadurch gekennzeichnet, daß** der Gasgenerator (20) mittels eines sich über die Packlänge (L) des Gassacks (12) und in ihn hinein erstreckenden Gasführungsrohres (22) mit dem Inneren des Gassacks (12) verbunden ist.

8. Schutzeinrichtung nach Anspruch 7, **gekennzeichnet durch** ein flexibles Aufnahmeteil (32) für den gefalteten Gassack (12) und das Gasführungsrohr (22),
wobei das Aufnahmeteil (32) an der Seitenwandverkleidung (10) befestigt ist.

9. Schutzeinrichtung nach Anspruch 8, **dadurch gekennzeichnet, daß** sie in die Seitenwandverkleidung (10) integriert ist und mit dieser eine vormontierte Einheit bildet.

10. Schutzeinrichtung nach einem der vorhergehenden Ansprüche, **dadurch gekennzeichnet, daß** sich der entfaltete Gassack (12) über wenigstens annähernd die Hälfte der Länge der zugeordneten Seitenwand erstreckt.

11. Schutzeinrichtung nach einem der vorhergehenden Ansprüche, **dadurch gekennzeichnet, daß** der Gassack (12) über eine Leitung mit einem zweiten Gassack strömungsmäßig verbunden ist.

12. Schutzeinrichtung nach einem der vorhergehenden Ansprüche, **dadurch gekennzeichnet, daß** die Seitenwandverkleidung (10) eine Türverkleidung ist.

13. Schutzeinrichtung nach einem der vorhergehenden Ansprüche, **dadurch gekennzeichnet, daß** sie in die Vordertür integriert ist und sich der entfaltete Gassack (12) über die Tür hinaus nach hinten erstreckt und die B-Säule (18) des Fahrzeugs in Längsrichtung abdeckt.

14. Schutzeinrichtung nach einem der vorhergehenden Ansprüche, **dadurch gekennzeichnet, daß** die Klappe (28) eine Länge aufweist, die wenigstens der Packlänge (L) des Gassacks (12) entspricht.

## Claims

1. An inflatable side impact protection device for vehicle occupants, which is integrated in a vehicle side panel, comprising
a gas bag (12),
a gas generator (20), and
a side panel covering (10),
the side panel covering (10) having an upper end piece (24) which terminates the covering at the lower edge (14) of the window section (13),
the upper end piece (24) being configured, at least in sections, as a flap (28) which, when swung open, defines a downwardly directed ejection channel (50) for the gas bag (12),
**characterized in that** the gas bag (12) is attached at its upper end and is arranged folded under the upper end piece (24),
and in the deployed state the gas bag (12) covers the side panel covering (10) over a large area to the side of the thorax and pelvic regions of the occupant by an inflated portion extending from the lower edge (14) of the window section (13) continuously as far as to the side of the pelvic region.

2. The protection device according to claim 1, **characterized in that** the end piece (24) has a lower edge (42) which is held in place on the remainder of the side panel covering (10) by means of a fastening means that can be released by the deploying gas bag (12).

3. The protection device according to claim 2, **characterized in that** the releasable fastening means is a trim strip (26) of the side panel covering (10), the lower edge (42) extending behind this trim strip which clamps the lower edge (42).

4. The protection device according to any of the preceding claims, **characterized in that** the gas bag (12) in the deployed state extends at least as far as to the armrest (16) in the side panel.

5. The protection device according to any of the preceding claims, **characterized in that** the gas bag (12) in the folded state has an elongated shape.

6. The protection device according to any of the preceding claims, **characterized in that** the gas generator (20) is arranged outside of the gas bag (12).

7. The protection device according to claim 6, **characterized in that** the gas generator (20) is connected to the interior of the gas bag (12) by means of a gas conveying tube (22) extending along the pack length (L) of and into the gas bag (12).

8. The protection device according to claim 7, **characterized by** a flexible receptacle (32) for the folded gas bag (12) and the gas conveying tube (22), the receptacle (32) being fastened to the side panel covering (10).

9. The protection device according to claim 8, **characterized in that** it is integrated in the side panel covering (10) and forms a preassembled unit with it.

10. The protection device according to any of the preceding claims, **characterized in that** the deployed gas bag (12) extends over at least approximately one half of the length of the associated side panel.

11. The protection device according to any of the preceding claims, **characterized in that** the gas bag (12) is connected in terms of flow to a second gas bag via a conduit.

12. The protection device according to any of the preceding claims, **characterized in that** the side panel covering (10) is a door lining.

13. The protection device according to any of the preceding claims, **characterized in that** it is integrated in the front door and that the deployed gas bag (12) extends beyond the door towards the rear and covers the B pillar (18) of the vehicle in the longitudinal direction.

14. The protection device according to any of the preceding claims, **characterized in that** the flap (28) has a length corresponding to at least the pack length (L) of the gas bag (12).

## Revendications

1. Dispositif de protection gonflable contre les impacts latéraux pour des occupants d'un véhicule, lequel est intégré dans une paroi latérale du véhicule, comportant
un coussin à gaz (12),
un générateur de gaz (20) et
une garniture de paroi latérale (10),
la garniture de paroi latérale (10) présentant une partie de terminaison supérieure (24) qui termine la garniture vers le bord inférieur (14) du tronçon de fenêtre (13),
la partie de terminaison supérieure (24) étant réalisée au moins par tronçons sous la forme d'un volet (28) qui, lorsqu'il est ouvert par pivotement, définit un canal d'éjection (50) dirigé vers le bas pour le coussin à gaz (12),
**caractérisé en ce que** le coussin à gaz (12) est fixé à son extrémité supérieure et est agencé plié au-dessous de la partie de terminaison supérieure (24),
et le coussin à gaz (12) à l'état déployé recouvre sur une grande surface la garniture de paroi latérale (10) latéralement à la région du thorax et du bassin de l'occupant par une partie gonflée s'étendant depuis le bord inférieur (14) du tronçon de fenêtre (13) de manière continue jusque sur le côté de la région du bassin.

2. Dispositif de protection selon la revendication 1, **caractérisé en ce que** la partie de terminaison (24) présente un bord inférieur (42) qui est maintenu en place sur le reste de la garniture de paroi latérale (10) au moyen d'une fixation qui peut être détachée par le coussin à gaz (12) qui se déploie.

3. Dispositif de protection selon la revendication 2, **caractérisé en ce que** la fixation détachable est une moulure décorative (26) de la garniture de paroi latérale (10), derrière laquelle s'étend le bord inférieur (42) et qui serre le bord inférieur (42).

4. Dispositif de protection selon l'une des revendications précédentes, **caractérisé en ce que** le coussin à gaz (12) s'étend à l'état déployé au moins jusqu'à l'accoudoir (16) dans la paroi latérale.

5. Dispositif de protection selon l'une des revendications précédentes, **caractérisé en ce que** le coussin à gaz (12) à l'état plié a une forme allongée.

6. Dispositif de protection selon l'une des revendications précédentes, **caractérisé en ce que** le générateur de gaz (20) est agencé en dehors du coussin à gaz (12).

7. Dispositif de protection selon la revendication 6, **caractérisé en ce que** le générateur de gaz (20) est relié avec l'intérieur du coussin à gaz (12) au moyen d'un tube de conduite de gaz (22) s'étendant sur la longueur de paquet (L) du coussin à gaz (12) et jusque dans celui-ci.

8. Dispositif de protection selon la revendication 7, **caractérisé par** une partie de logement (32) flexible pour le coussin à gaz (12) plié et pour le tube de conduite de gaz (22), la partie de logement (32) étant fixée sur la garniture de paroi latérale (10).

9. Dispositif de protection selon la revendication 8, **caractérisé en ce qu'**il est intégré dans la garniture de paroi latérale (10) et qu'il forme avec celle-ci une unité préassemblée.

10. Dispositif de protection selon l'une des revendications précédentes, **caractérisé en ce que** le coussin à gaz (12) qui se déploie s'étend sur au moins approximativement la moitié de la longueur de la paroi latérale associée.

11. Dispositif de protection selon l'une des revendications précédentes, **caractérisé en ce que** le coussin à gaz (12) est relié en écoulement à un deuxième coussin à gaz par l'intermédiaire d'une conduite.

12. Dispositif de protection selon l'une des revendications précédentes, **caractérisé en ce que** la garniture de paroi latérale (10) est une garniture de portière.

13. Dispositif de protection selon l'une des revendications précédentes, **caractérisé en ce qu'**il est intégré dans la portière avant et le coussin à gaz (12) déployé s'étend au-delà de la portière vers l'arrière et recouvre la colonne B (18) du véhicule en direction longitudinale.

14. Dispositif de protection selon l'une des revendications précédentes, **caractérisé en ce que** le volet (28) présente une longueur qui correspond au moins à la longueur de paquet (L) du coussin à gaz (12).
